# EUROPEAN PATENT APPLICATION

(11) **EP 4 814 696 A1**
(43) Date of publication of application: **30.09.2026**
(21) Application number: 25197993.6
(22) Date of filing: 26.08.2025
(51) Int. Cl.: G06F 8/65, G06F 13/40, G06F 13/42

(54) **FIRMWARE UPDATE SWITCHING CONTROL METHOD AND NON-TRANSITORY COMPUTER READABLE MEDIUM**

(30) Priority: 27.03.2025 CN 202510373540
(71) Applicant: Getac Technology Corporation, New Taipei City 221009 (TW)
(72) Inventor: SHIH, Shan-Fu, Taipai City 11568 (TW); CHENG, Hsueh Mao, Taipai City 11568 (TW); CHEN, Cheng-Chieh, Taipai City 11568 (TW)
(74) Representative: Cabinet Beaumont

(57) **Abstract**

A firmware update switching control method comprises connecting a main computer device to an expansion electronic device; switching a path of an inter-integrated circuit (I²C) bus; connecting a basic input/output system (BIOS) of the main computer device to a preset integrated circuit of the expansion electronic device through the path of the I²C bus; and updating a firmware of the preset integrated circuit through the BIOS.

## Description

### BACKGROUND

### Field of Disclosure

The disclosure relates to a control method. More particularly, the disclosure relates to a firmware update switching control method.

### Description of Related Art

Data communication between the smart tablet and the keyboard base is established through a single inter-integrated circuit (I²C) bus, providing the sole communication pathway between the two components. However, additional one I²C bus is required to connect between a basic input/output system of the tablet computer and a power deliver chip of the keyboard base to perform firmware update. It is difficult to update the firmware of the power delivery chip of the keyboard base without the additional one I²C bus.

Furthermore, when the power delivery chip fails and has to be resolved by firmware update after mass production, hundreds or thousands of the keyboard bases have to disassembled, which is extremely time-consuming and labor-intensive.

### SUMMARY

The disclosure provides a firmware update switching control method comprises connecting a main computer device to an expansion electronic device; switching a path of an inter-integrated circuit (I²C) bus; connecting a basic input/output system (BIOS) of the main computer device to a preset integrated circuit of the expansion electronic device through the path of the I²C bus; and updating a firmware of the preset integrated circuit through the BIOS.

The disclosure also provides a non-transitory computer readable medium storing a computer program for performing a firmware update switching control method. The firmware update switching control method comprises connecting a main computer device to an expansion electronic device; switching a path of an I²C bus; isolating a first keyboard controller of the main computer device from a second keyboard controller of the expansion electronic device through the path of the I²C bus; and using a BIOS of the main computer device to update a firmware of a preset integrated circuit of the expansion electronic device through the I²C bus.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a schematic diagram illustrating a main computer device and an expansion electronic device according to an embodiment of the disclosure.
Fig. 2 is a circuit block diagram illustrating a path switching device according to an embodiment of the disclosure.
Fig. 3 is a flow chart illustrating a firmware update switching control method according to an embodiment of the disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

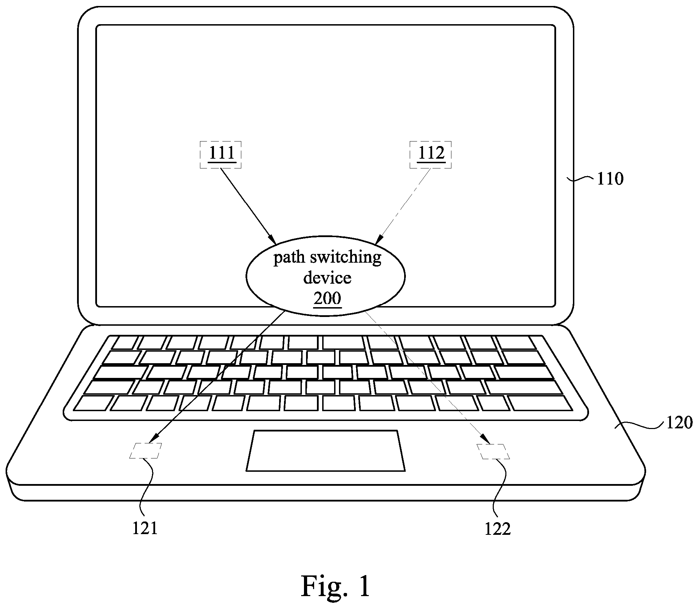

Fig. 1 is a schematic diagram illustrating a main computer device 110 and an expansion electronic device 120 according to an embodiment of the disclosure. As shown in Fig. 1, the main computer device 110 is connected to the expansion electronic device 120. For example, the main computer device 110 may be a tablet computer or other host, the expansion electronic device 120 may be a keyboard dock or other external electronic device.

In one embodiment, the main computer device 110 includes a basic input/output system (BIOS) 111 and a first keyboard controller 112, the expansion electronic device 120 includes a preset integrated circuit 121 and a second keyboard controller 122.

When the main computer device 110 is used, a path switching device 200 isolates the BIOS 111 of the main computer device 110 from the preset integrated circuit 121 of the expansion electronic device 120 and connects the first keyboard controller 112 of the main computer device 110 to the second keyboard controller 122 of the expansion electronic device 120 to synchronize system status and special key combination events of the main computer device 110 and the expansion electronic device 120. The special key combination events may include, for example, a combination operation of virtual keys of a touch screen of the main computer device 110 and physical keys of the expansion electronic device 120, but the disclosure is not limited thereto.

When the main computer device 110 updates the preset integrated circuit 121 (e.g., a power delivery chip) of the expansion electronic device 120, the path switching device 200 isolates the first keyboard controller 112 of the main computer device 110 from the second keyboard controller 122 of the expansion electronic device 120 and connects the BIOS 111 of the main computer device 110 to the preset integrated circuit 121 of the expansion electronic device 120 so that the main computer device 110 may update a firmware of the preset integrated circuit 121 through the BIOS 111.

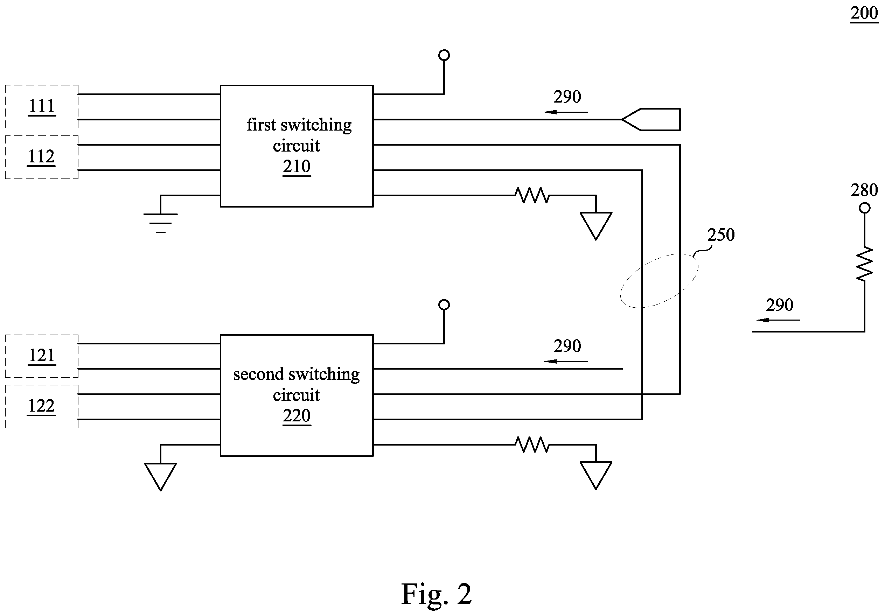

Referring to Figs. 1 and 2, the aforementioned path switching device 200 is further described. Fig. 2 is a circuit block diagram illustrating a path switching device 200 according to an embodiment of the disclosure. As shown in Fig. 2, the path switching device 200 includes a first switching circuit 210, a second switching circuit 220, and an inter-integrated circuit (I²C) bus 250.

In one embodiment, the first switching circuit 210 and an embedded controller 280 may be disposed on the main computer device 110, and the second switching circuit 220 may be disposed on the expansion electronic device 120.

Specifically, in some embodiments of the disclosure, the first switching circuit 210 of the main computer device 110 is connected to the first keyboard controller 112 and the BIOS 111, and the second switching circuit 220 of the expansion electronic device 120 is connected to the second keyboard controller122 and the preset integrated circuit 121.

After the main computer device 110 is connected to the expansion electronic device 120, the first switching circuit 210 of the main computer device 110 is connected to the second switching circuit 220 of the expansion electronic device 120 through the I²C bus 250. A path of the I²C bus 250 may be switched through the first switching circuit 210 of the main computer device 110 and the second switching circuit 220 of the expansion electronic device 120.

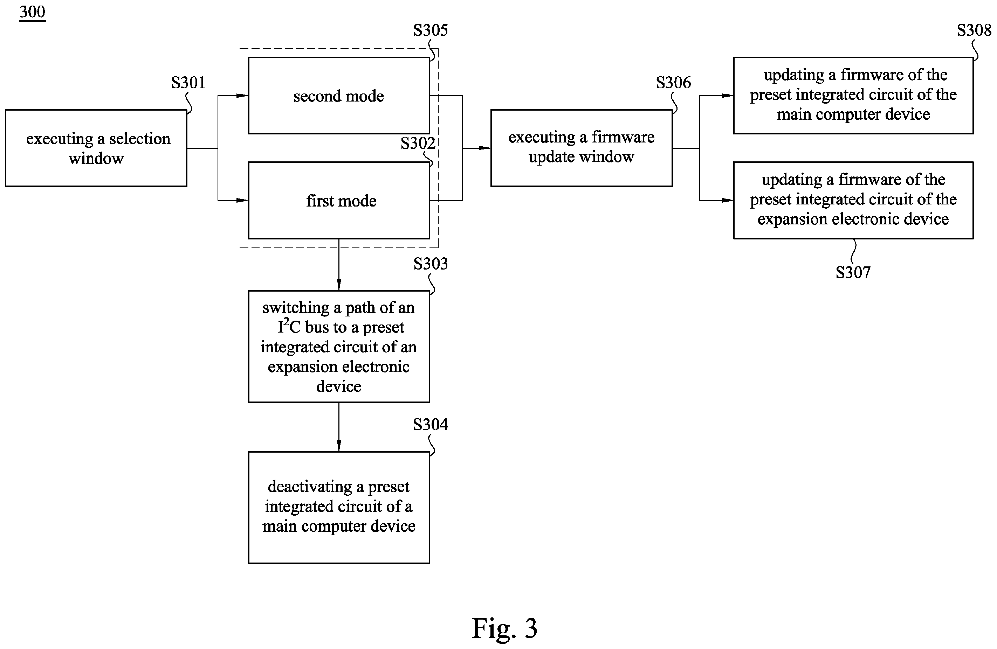

Referring to Figs. 1 to 3, a switching method of the path of the I²C bus 250 is further described. Fig. 3 is a flow chart illustrating a firmware update switching control method 300 according to an embodiment of the disclosure. As shown in Fig. 3, the firmware update switching control method 300 includes steps S301 to S308. It should be noted that the steps mentioned in this embodiment, except for those whose order is specifically described, may be adjusted in order according to actual needs, or may be performed simultaneously or partially simultaneously.

The firmware update switching control method 300 may be in the form of a computer program product of a non-transitory computer readable medium, the non-transitory computer readable medium has a plurality of computer readable instructions contained in a medium. The non-transitory computer readable medium may include any of the followings: non-volatile memory, such as read-only memory (ROM), programmable read-only memory (PROM), erasable programmable read-only memory (EPROM), electrically erasable programmable read-only memory (EEPROM); volatile memory, such as static random access memory (SRAM), dynamic random access memory (DRAM), double data rate random access memory (DDR-RAM); optical storage device, such as compact disc read-only memory (CD-ROM), digital versatile disc read-only memory (DVD-ROM); and magnetic storage device, such as hard disk drive (HDD), floppy disk drive.

In some embodiments of the disclosure, after the main computer device 110 is connected to the expansion electronic device 120, in step S301, the main computer device 110 executes a selection window. When a first mode is selected by a user through the selection window, in step S302, the main computer device 110 executes the first mode. In step S303, the path of the I²C bus 250 is switched to connect the BIOS 111 of the main computer device 110 to the preset integrated circuit 121 of the expansion electronic device 120 and to isolate the first keyboard controller 112 of the main computer device 110 from the second keyboard controller 122 of the expansion electronic device 120.

Specifically, the BIOS 111 of the main computer device 110 is connected to the preset integrated circuit 121 of the expansion electronic device 120 through the path of the I²C bus 250, and the first keyboard controller 112 of the main computer device 110 is isolated from the second keyboard controller 122 of the expansion electronic device 120 through the path of the I²C bus 250.

In some embodiments of the disclosure, in the first mode of step S302, the embedded controller 280 provides a signal 290 as a first logic level signal (e.g., logical low, logic 0, etc.) to the first switching circuit 210 and the second switching circuit 220. In step S303, the first keyboard controller 112 is isolated from the I²C bus 250 and the BIOS 111 is connected to the I²C bus 250 through the first switching circuit 210 when the first switching circuit 210 receives the first logic level signal. The second keyboard controller 122 is isolated from the I²C bus 250 and the preset integrated circuit 121 is connected to the I²C bus 250 through the second switching circuit 220 when the second switching circuit 220 receives the first logic level signal. As a result, the BIOS 111 is connected to the preset integrated circuit 121 through the first switching circuit 210, the I²C bus 250, and the second switching circuit 220.

In some embodiments of the disclosure, in step S304, a preset integrated circuit of the main computer device 110 is deactivated when the BIOS 111 of the main computer device 110 is connected to the preset integrated circuit 121 of the expansion electronic device 120. A specification of the preset integrated circuit 121 (e.g., a power delivery chip) of the expansion electronic device 120 is same as a specification of the preset integrated circuit (e.g., a power delivery chip) of the main computer device 110.

It should be noted that since the main computer device 110 also includes the preset integrated circuit, when the first mode is executed, the preset integrated circuit 121 of the expansion electronic device 120 is connected to the main computer device 110 through the I²C bus 250 so that a device management software of the main computer device 110 may present information of multiple preset integrated circuits (for example, information that the main computer device 110 includes two preset integrated circuits). At this time, since a update tool corresponding to a firmware update window does not have a function for selecting which preset integrated circuit to update, the main computer device 110 instructs the first keyboard controller 112 to notify a driver to deactivate the preset integrated circuit of the main computer device 110 to ensure that, in step S306, the update tool corresponding to the firmware update window may flash firmware to the preset integrated circuit to be updated.

On the other hand, when a second mode is selected by the user through the selection window, in step S305, the main computer device 110 executes the second mode. In some embodiments of the disclosure, in the second mode, the embedded controller 280 provides a signal 290 as a second logic level signal (e.g., logical high, logic 0, etc.) to the first switching circuit 210 and the second switching circuit 220. The first keyboard controller 112 is connected to the I²C bus 250 and the BIOS 111 is isolated from the I²C bus 250 through the first switching circuit 210 when the first switching circuit 210 receives the second logic level signal. The second keyboard controller 122 is connected to the I²C bus 250 and the preset integrated circuit 121 is isolated from the I²C bus 250 through the second switching circuit 220 when the second switching circuit 220 receives the second logic level signal. As a result, the first keyboard controller 112 is connected to the second keyboard controller 122 through the first switching circuit 210, the I²C bus 250, and the second switching circuit 220.

When the user wants to perform firmware update, the user opens the firmware update window of the main computer device 110. In step S307, the main computer device 110 executes the firmware update window to perform firmware update.

Subsequently, when the first mode is selected by the user through the selection window, since the preset integrated circuit of the main computer device 110 is deactivated in step S304, in step S307, the BIOS 111 updates a firmware of the preset integrated circuit 121 of the expansion electronic device 120.

On the other hand, when the second mode is selected by the user through the selection window, since the preset integrated circuit 121 of the expansion electronic device 120 is isolated from the I²C bus 250, in step S308, the BIOS 111 updates a firmware of the preset integrated circuit of the main computer device 110.

For example, the firmware update switching control method 300 may be embodied as an application program of the operating system of the main computer device 110. A switching timing may be determined by the user and does not need to depend on the status of the main computer device 110. Furthermore, the firmware update switching control method 300 does not need to rely on an additional universal serial bus (USB), does not need additional I²C bus so that the disassembly of the expansion electronic device 120 may be avoided.

In summary, through the firmware update switching control method 300 of the disclosure and the non-transitory computer readable medium, the original functions may be retained with one I²C bus 250, and the path of the I²C bus 250 may be switched by the user to update the firmware of the integrated circuit 121 of the expansion electronic device 120.

## Claims

1. A firmware update switching control method (300), **characterized by** comprising:
connecting a main computer device (110) to an expansion electronic device (120);
switching a path of an inter-integrated circuit (I²C) bus;
connecting a basic input/output system (BIOS) (111) of the main computer device (110) to a preset integrated circuit (121) of the expansion electronic device (120) through the path of the I²C bus (250); and
updating a firmware of the preset integrated circuit (121) through the BIOS (111).

2. The firmware update switching control method (300) of claim 1, **characterized in that** switching the path of the inter-integrated circuit (12C) bus comprises:
isolating a first keyboard controller (112) of the main computer device (110) from a second keyboard controller (122) of the expansion electronic device (120).

3. The firmware update switching control method (300) of claim 2, **characterized in that** a first switching circuit (210) of the main computer device (110) is connected to the first keyboard controller (112) and the BIOS (111), a second switching circuit (220) of the expansion electronic device (120) is connected to the second keyboard controller (122) and the preset integrated circuit (121), after the main computer device (110) is connected to the expansion electronic device (120), the first switching circuit (210) of the main computer device (110) is connected to the second switching circuit (220) of the expansion electronic device (120) through the I2C bus (250).

4. The firmware update switching control method (300) of claim 3, **characterized in that** connecting the basic input/output system (BIOS) (111) of the main computer device (110) to the preset integrated circuit (121) of the expansion electronic device (120) through the path of the I2C bus (250) comprises:
isolating the first keyboard controller (112) from the I2C bus (250) and connecting the BIOS (111) to the I2C bus (250) through the first switching circuit (210) when the first switching circuit (210) receives a first logic level signal; and
isolating the second keyboard controller (122) from the I2C bus (250) and connecting the preset integrated circuit (121) to the I2C bus (250) through the second switching circuit (220) when the second switching circuit (220) receives the first logic level signal, wherein the BIOS (111) is connected to the preset integrated circuit (121) through the first switching circuit (210), the I2C bus (250), and the second switching circuit (220).

5. The firmware update switching control method (300) of claim 4, **characterized by** further comprising:
connecting the first keyboard controller (112) to the I2C bus (250) and isolating the BIOS (111) from the I2C bus (250) through the first switching circuit (210) when the first switching circuit (210) receives a second logic level signal; and
connecting the second keyboard controller (122) to the I2C bus (250) and isolating the preset integrated circuit (121) from the I2C bus (250) through the second switching circuit (220) when the second switching circuit (220) receives the second logic level signal, wherein the first keyboard controller (112) is connected to the second keyboard controller (122) through the first switching circuit (210), the I2C bus (250), and the second switching circuit (220).

6. The firmware update switching control method (300) of any one of claims 1 to 5, **characterized by** further comprising:
deactivating a preset integrated circuit of the main computer device (110) when the BIOS (111) of the main computer device (110) is connected to the preset integrated circuit (121) of the expansion electronic device (120), wherein a specification of the preset integrated circuit (121) of the expansion electronic device (120) is same as a specification of the preset integrated circuit of the main computer device (110).

7. The firmware update switching control method (300) of claim 6, **characterized in that** the preset integrated circuit (121) of the expansion electronic device (120) and the preset integrated circuit of the main computer device (110) are power delivery chips.

8. A non-transitory computer readable medium, storing a computer program for performing a firmware update switching control method (300), **characterized in that** the firmware update switching control method (300) comprises:
connecting a main computer device (110) to an expansion electronic device (120);
switching a path of an I2C bus (250);
isolating a first keyboard controller (112) of the main computer device (110) from a second keyboard controller (122) of the expansion electronic device (120) through the path of the I2C bus (250); and
using a BIOS (111) of the main computer device (110) to update a firmware of a preset integrated circuit (121) of the expansion electronic device (120) through the I2C bus (250).

9. The non-transitory computer readable medium of claim 8, **characterized in that** switching the path of the I2C bus (250) comprises:
connecting the BIOS (111) of the main computer device (110) to the preset integrated circuit (121) of the expansion electronic device (120).

10. The non-transitory computer readable medium of claim 9, **characterized in that** switching the path of the I2C bus (250) further comprises:
switching the path of the I2C bus (250) through a first switching circuit (210) of the main computer device (110) and a second switching circuit (220) of the expansion electronic device (120).

11. The non-transitory computer readable medium of claim 10, **characterized in that** the first switching circuit (210) is connected to the first keyboard controller (112) and the BIOS (111), the second switching circuit (220) is connected to the second keyboard controller (122) and the preset integrated circuit (121), after the main computer device (110) is connected to the expansion electronic device (120), the first switching circuit (210) of the main computer device (110) is connected to the second switching circuit (220) of the expansion electronic device (120) through the I2C bus (250).

12. The non-transitory computer readable medium of claim 11, **characterized in that** isolating the first keyboard controller (112) of the main computer device (110) from the second keyboard controller (122) of the expansion electronic device (120) through the path of the I2C bus (250) comprises:
isolating the first keyboard controller (112) from the I2C bus (250) and connecting the BIOS (111) to the I2C bus (250) through the first switching circuit (210) when the first switching circuit (210) receives a first logic level signal; and
isolating the second keyboard controller (122) from the I2C bus (250) and connecting the preset integrated circuit (121) to the I2C bus (250) through the second switching circuit (220) when the second switching circuit (220) receives the first logic level signal, wherein the BIOS (111) is connected to the preset integrated circuit (121) through the first switching circuit (210), the I2C bus (250), and the second switching circuit (220).

13. The non-transitory computer readable medium of claim 12, **characterized in that** the firmware update switching control method (300) further comprises:
connecting the first keyboard controller (112) to the I2C bus (250) and isolating the BIOS (111) from the I2C bus (250) through the first switching circuit (210) when the first switching circuit (210) receives a second logic level signal; and
connecting the second keyboard controller (122) to the I2C bus (250) and isolating the preset integrated circuit (121) from the I2C bus (250) through the second switching circuit (220) when the second switching circuit (220) receives the second logic level signal, wherein the first keyboard controller (112) is connected to the second keyboard controller (122) through the first switching circuit (210), the I2C bus (250), and the second switching circuit (220).

14. The non-transitory computer readable medium of any one of claims 8 to 13, **characterized in that** the firmware update switching control method (300) further comprises:
deactivating a preset integrated circuit of the main computer device (110) when the BIOS (111)of the main computer device (110) is connected to the preset integrated circuit (121) of the expansion electronic device (120).

15. The non-transitory computer readable medium of claim 14, **characterized in that** a specification of the preset integrated circuit (121) of the expansion electronic device (120) is same as a specification of the preset integrated circuit of the main computer device (110), the preset integrated circuit (121) of the expansion electronic device (120) and the preset integrated circuit of the main computer device (110) are power delivery chips.
